# EUROPÄISCHE PATENTSCHRIFT

(11) **EP 2 596 694 B1**
(45) Veröffentlichungstag und Bekanntmachung des Hinweises auf die Patenterteilung: **20.01.2016**
(21) Anmeldenummer: 13000156.3
(22) Anmeldetag: 02.11.2010
(51) Int. Cl.: A01B 79/00, A01C 17/00

(54) **Verfahren zum Verteilen von Mineraldünger auf dem Feld und im Vorgewende mittels Zweischeibenstreuern**
Method for distributing mineral fertiliser on a field and headland using dual-blade distributors
Procédé de répartition d'engrais minéral sur le champ et dans le bout de champ à l'aide d'épandeurs à double plaque

(30) Priorität: 04.11.2009 DE 102009051972
(43) Veröffentlichungstag der Anmeldung: 29.05.2013
(62) Teilanmeldung aus: 10014192.8
(73) Patentinhaber: RAUCH Landmaschinenfabrik GmbH, 76547 Sinzheim (DE)
(72) Erfinder: Rauch, Norbert, D-76547 Sinzheim (DE); Stöcklin, Volker, D-77975 Ringsheim (DE); Dingeldey, Nico, D-64397 Modautal (DE)
(74) Vertreter: Lenz, Steffen

(56) Entgegenhaltungen:
- EP-A1- 2 080 430
- EP-A2- 1 269 817
- EP-A2- 1 692 928
- DE-A1- 19 723 359
- FR-A1- 2 719 188

## Beschreibung

Die Erfindung betrifft ein Verfahren zum Verteilen von Mineraldünger auf dem Feld und im Vorgewende mittels Zweischeibenstreuern, deren rotierenden Streuscheiben der Mineraldünger aus einem Vorratsbehälter über Dosierorgane aufgegeben wird, wobei im Feld durch Anschlussfahren in parallelen Fahrgassen die etwa halbkreisförmige Düngerverteilung mit derjenigen der benachbarten Fahrgasse überlappt und in der Überlappungszone zwischen der halbkreisförmigen Düngerverteilung im Feld und der Düngerverteilung im Vorgewende die Düngerablage mittels GPS-gesteuerter Dosiercomputer, welche die Dosierorgane mittels GPS-Signalen bei der Fahrt aus dem Feld in das Vorgewende ausschalten und bei der Fahrt vom Vorgewende in das Feld einschalten, unterbrochen bzw. wieder aufgenommen wird, wobei im Dosiercomputer zumindest eine erste Strategie je nach Fahrweise des Landwirts und Anspruch an eine gute Düngerverteilung für die Ein- und Ausschaltung der Dosierorgane hinterlegt und aufrufbar ist, welche einen GPS-gesteuerten Ausschalt- und Einschaltpunkt einstellt und eine unter Berücksichtigung der Arbeitsbreite ermittelte optimierte Düngerverteilung von der Feldausfahrt in das Vorgewende und bei der Einfahrt von diesem in das Feld ermöglicht.

In der Landwirtschaft werden zur gezielten Ernährung der Pflanzen überwiegend Mineraldünger eingesetzt. Die Verteilung des in der Regel in Kornform vorliegenden Mineraldüngers erfolgt mit Mineraldüngerstreuern, wobei sich Zweischeibenstreuer weltweit durchgesetzt haben. Solche Mineraldüngerstreuer verteilen mittels rotierender Streuscheiben den Mineraldünger auf das Feld. Dieses Verfahren ermöglicht große Arbeitsbreiten bis zu 48 m und mehr und Streubreiten bis zu 70 m. Die Mineraldüngerstreuer sind in ihrer Handhabung einfach, benötigen keine aufwändigen Verteilergestänge wie Pneumatikdüngerstreuer, sind im Anschaffungspreis günstig und ermöglichen selbst auf großen Arbeitsbreiten eine gute Düngerverteilung.

Nachteilig ist, dass die Düngerverteilung in einem halbkreisförmigen Bogen auf der Feldoberfläche erfolgt, wobei die Streumenge innerhalb des Halbkreises von einem Maximum in der Mitte jeweils nach rechts und links bis auf null absinkt. Für eine gleichmäßige Düngerverteilung auf dem Feld ist deshalb während des Ausstreuens eine Fahrweise erforderlich, bei der sich die Halbkreise überlappen. Die auf der Feldoberfläche auf einem Halbkreis abgelegte Düngermenge weist z.B. eine sich quer zu Fahrtrichtung erstreckende Breite (= Streubreite) von 48 m auf. Die für eine gleichmäßige Verteilung nutzbare, sogenannte Arbeitsbreite beträgt jedoch nur 24 m. Eine große, idealerweise doppelte Überlappung (Streubreite ist doppelt so groß wie die Arbeitsbreite) ist wünschenswert, da dadurch eine gute Düngerverteilung erreicht wird. Bei einer großen Streubreite ergibt sich auch eine große Wurfweite (Abstand des Schwerpunktes der halbkreisförmigen Düngerverteilung auf der Feldoberfläche zur Streuscheibenmitte). Die Streubreite und damit auch die Wurfweite ist von den physikalischen Eigenschaften des Düngers, der Konstruktion (Länge und Anstellung der Wurfflügel, etc.) und der Drehzahl der Streuscheiben abhängig.

Zur Optimierung der Feldarbeiten, wie z.B. Pflanzenschutzmaßnahmen oder Düngung, werden auf den Feldern so genannte Fahrgassen eingerichtet, in denen die Maschinen wiederholt fahren. Der Abstand solcher, untereinander paralleler Fahrgassen kann von 12 m bis über 48 m betragen, was der von dem Düngerstreuer einzuhaltenden Arbeitsbreite entspricht. Die großen, vorteilhaften Streubreiten (= doppelte Arbeitsbreiten) für eine gute Düngerverteilung im Feld führen jedoch zu Problemen an den Feldgrenzen. Für die fahrgassenparallelen Feldgrenzen sind sogenannte Grenzstreueinrichtungen erfolgreich im Einsatz.

Im sogenannten Vorgewende wird eine Fahrgasse quer (in der Regel 90°) zu den Feldfahrgassen am Anfang und Ende des Feldes eingerichtet. Die Breite dieses Vorgewendes entspricht der im Feld vorliegenden Arbeitsbreite. Auch die Feldränder des Vorgewendes werden mit einer Grenzstreueinrichtung abgestreut.

Problemtisch ist die Düngerverteilung bei der Feldausfahrt in das Vorgewende im Übergangsbereich zur Düngerverteilung im Vorgewende und bei der Feldeinfahrt (Vorgewende - Feldinneres). Bei der heute üblichen Arbeitsweise und dem üblicheren Vorhandensein nur einer Vorgewendefahrgasse schaltet der Landwirt die Dosierorgane im Traktor deutlich vor dem Einbiegen in die Vorgewendefahrgasse ab, da bei der heute üblichen Fahrgeschwindigkeit eine hohe Konzentration auf den Einbiegevorgang erforderlich ist. Neuere Erkenntnisse haben jedoch ergeben, dass dabei eine Unterdüngung im Feld festzustellen ist, weil beim Abschalten der Dosierorgane die dreidimensionale halbkreisförmige Düngerverteilung nur mit ihren außenliegenden Bereichen (kleine Streumenge) die Düngerverteilung im Vorgewende erreicht hat, nicht aber das Zentrum (große Streumenge) der halbkreisförmigen Düngerverteilung, so dass es zu einer Unterdüngung kommt.

Bei dem bekannten Verfahren nach dem einleitenden Absatz und dem Oberbegriff des Anspruchs 1 (EP 1 692 929 A1) wird vorgeschlagen, mittels Dosiercomputer den Ein- und Ausschaltpunkt der Dosierorgane über GPS zu steuern. Im Übergangsbereich vom Feld zum Vorgewende soll ein über- oder unterdüngter Bereich, jedoch angenähert an eine gleichmäßige Verteilung entstehen. Erfahrungsgemäß entsteht bei der Feldausfahrt eine Unterdüngung, wenn zu weit weg von der Düngerverteilung im Vorgewende (größerer Abstand zur Feldgrenze) ausgeschaltet wird, und eine Überdüngung, wenn zu weit im Vorgewende (kürzerer Abstand zur Feldgrenze) ausgeschaltet wird. Analog entsteht eine Über- und Unterdüngung bei der Feldeinfahrt. Bei dem vorgenannten Stand der Technik liegt der Ausschaltpunkt der Dosierorgane bei der Feldausfahrt in das Vorgewende jenseits der Begrenzungslinie zwischen beiden innerhalb des Vorgewendes und der Einschaltpunkt bei der Feldeinfahrt aus dem Vorgewende jenseits der Begrenzungslinie im Feldinneren. Ein- und Ausschaltpunkt sind bezüglich der Feldgeometrie in einem Rechner hinterlegt und GPS-gesteuert. Die Ein- und Ausschaltpunkte sollen durch Streuversuche oder durch ein Optimierungs- bzw. Simulationsprogramm ermittelt werden. Wie dies im einzelnen zu geschehen hat, lässt dieser Stand der Technik offen. Intensive Forschungen und Simulationen der Überlappungen der jeweils halbkreisförmigen Düngerverteilungen aus der Feldausfahrt und der Feldeinfahrt haben u.a. eine hohe Abhängigkeit der optimalen Ein- und Ausschaltpunkte von den physikalischen Eigenschaften ergeben. Diese Zusammenhänge sind in der Patentschrift nicht berücksichtigt. Auch ist die Definition der Lage der Ein- und Ausschaltpunkte als Begrenzungslinie des Streubildes nach vorne in Fahrtrichtung zumindest unpräzise. Ebenfalls ist die Darstellung des Streufächers im Verhältnis zum gezeigten Zweischeibendüngerstreuer falsch, da das halbkreisförmige Streubild in der Fahrgasse, je nach Dünger ca. 8 m bis 18 m hinter dem Zweischeibenstreuer liegt.

Die EP 1 692 928 A2 beschreibt ein elektronisches Maschinen-Management zum positionsgenauen Einleiten von Schalt- und Stellvorgängen bei landwirtschaftlichen Arbeitsmaschinen, welches unter anderem auch für Zweischeibenstreuer geeignet sein soll. Dabei wird mittels eines als geographischen Moduls nach Art eines GPS-Empfängers die aktuelle Position der Landmaschine ermittelt, während ein maschinenspezifisches Modul die maschinenspezifischen Funktionen enthält und von dem GPS-Empfänger die geographischen Informationsdaten in Echtzeit erhält, woraufhin es in Echtzeit die maschinenspezifischen Schalt- und Stellvorgänge generiert und entsprechende Signale an die jeweiligen Schalt- und Stellelemente sendet. Das geographische Modul bzw. der GPS-Empfänger teilt dem maschinenspezifischen Modul folglich die geographischen Informationen in Echtzeit mit und generiert das maschinenspezifische Modul aus diesen geographischen Informationen in Echtzeit die maschinenspezifischen Schalt- und Stellvorgänge. Dabei kann neben der aktuellen Fahrgeschwindigkeit und -richtung auch die Arbeitsbreite des maschinenspezifischen Moduls berücksichtigt werden. Was die Funktionsweise des elektronischen Maschinen-Managements im Falle einer Annäherung/Entfernung einer landwirtschaftlichen Maschine von dem/in das Feldinnere(n) in das/von dem Vorgewende betrifft, so sieht die Druckschrift eine rein positionsabhängige Steuerung der Dosierorgane in Abhängigkeit der über GPS erfassten Feldposition des Zweischeibenstreuers und unter Berücksichtigung der Fahrgeschwindigkeit, -richtung und Arbeitsbreite vor.

Ausgehend von dem genannten Stand der Technik liegt der Erfindung die Aufgabe zugrunde, je nach praktizierter Fahrweise des Landwirtes und Anspruch an eine gute Verteilung des Düngers eine Unter- oder Überdüngung im Übergangsbereich Feldausfahrt in das Vorgewende und eine Unter- oder Überdüngung im Übergangsbereich Feldeinfahrt aus dem Vorgewende zu minimieren.

Die Lösung der Erfindungsaufgabe besteht bei einem Verfahren gemäß dem Oberbegriff des Anspruchs 1 darin, dass bei der ersten Strategie die optimierte Düngerverteilung aufgrund komplexer Rechenverfahren pro Düngersorte und Arbeitsbreite ermittelt wird, wobei die optimierten Ausschalt- und Einschaltpunkte als Abstand von der Feldgrenze des Vorgewendes bis zur Streuscheibenmitte in Abhängigkeit von der in den Dosiercomputer einzugebenden mittleren Wurfweite, welche dem Abstand zwischen dem Schwerpunkt des gegen die Fahrtrichtung auf der Feldoberfläche liegenden Streufächers und der Mitte der Streuscheiben des Zweischeibenstreuers entspricht, für jeden Düngertyp und jede Arbeitsbreite ermittelt und eingestellt werden.

Dabei sieht die Erfindung vorzugsweise auch vor, dass
- die erste Strategie ferner eine aufgrund komplexer Rechenverfahren pro Drehzahl der Streuscheiben ermittelte optimierte Düngerverteilung von der Feldausfahrt in das Vorgewende und bei der Einfahrt von diesem in das Feld ermöglicht,
   und/oder dass
- die erste Strategie ferner eine aufgrund komplexer Rechenverfahren pro Streuscheibentyp ermittelte optimierte Düngerverteilung von der Feldausfahrt in das Vorgewende und bei der Einfahrt von diesem in das Feld ermöglicht, wobei bei der ersten Strategie die optimierten Ausschalt- und Einschaltpunkte als Abstand von der Feldgrenze des Vorgewendes bis zur Streuscheibenmitte ferner in Abhängigkeit von dem Streuscheibentyp ermittelt und eingestellt werden.

Mit der ersten Strategie wird durch ein komplexes bzw. simuliertes Rechenverfahren der Ausschaltpunkt pro Düngersorte und vorzugsweise auch pro Streuscheibentyp und Drehzahl der Streuscheiben ermittelt. Aufgrund neuer Erkenntnisse liegt der optimierte Ausschaltpunkt der halbkreisförmigen Verteilung für eine minimierte Unter- und Überdüngung bei etwa 1 m bis 8 m vor der Breite des Vorgewendes. Aufgrund der hohen Wurfweite der Zweischeibenstreuer (Abstand des Schwerpunktes der halbkreisförmigen Düngerverteilung auf der Feldoberfläche zur Streuscheibenmitte) von ca. 8 m bis 18 m befindet sich der Traktor in der Regel auch bei großen Breiten des Vorgewendes dann bereits hinter der Vorgewendefahrgasse, also nahe der Feldgrenze. Die Dosierorgane werden also erst abgeschaltet, wenn das Traktor-Streuergespann in Verlängerung der Feldfahrgasse bis nahe an die Feldgrenze heranfährt, dann parallel zur Vorgewendefahrgasse fährt und dann kehrt, um in die nächste Feldfahrgasse einzufahren. Nach einer gewissen Wegstrecke ist der ebenfalls mittels eines Rechenverfahrens ermittelte optimale Einschaltpunkt erreicht und werden die Dosierorgane wieder in Betrieb gesetzt. Die gleiche Fahrweise für eine optimale Düngerverteilung lässt sich auch durch die Anlage von zwei parallelen Vorgewendefahrgassen anwenden, wie sie bei gezogenen Zweischeibenstreuern aufgrund der Baulänge des Gespanns eigentlich zwingend notwendig wäre, oder auch dann, wenn entlang des Vorgewendes ein Weg verläuft, auf den der Traktor einbiegt, entlang fährt und von dem er wieder in Richtung zur nächsten Feldfahrgasse abbiegt.

In jedem Fall kann vorgesehen sein, dass bei der ersten Strategie die optimierten Ausschalt- und Einschaltpunkte als Abstand von der Feldgrenze des Vorgewendes bis zur Streuscheibenmitte
- intern ermittelt und eingestellt und/oder
- bei externer Ermittlung in den Dosiercomputer eingegeben und eingestellt
werden.

Heutzutage und üblicherweise legt der Landwirt nur eine Vorgewendefahrgasse an. Dabei fährt er dann mit dem Traktor-Streuer-Gespann bei der Feldausfahrt direkt in die Vorgewendefahrgasse. Aufgrund der hohen Wurfweiten heutiger moderner Zweischeibenstreuer kann jedoch der optimale für eine geringe Unterdüngung erforderliche Ausschaltpunkt nicht erreicht werden. Um auch hier aufgrund der räumlichen Verhältnisse zu einer, wenn auch nicht zur ersten Strategie vergleichbar optimalen, jedoch dennoch möglichen Minimierung der Unterdüngung zu gelangen, kann vorgesehen sein, dass im Dosiercomputer ferner eine zweite Strategie je nach Fahrweise des Landwirts und Anspruch an eine gute Düngerverteilung für die Ein- und Ausschaltung der Dosierorgane hinterlegt und wahlweise aufrufbar ist, wobei die zweite Strategie einen GPS-gesteuerten Ausschaltpunkt einstellt, der die räumlichen Verhältnisse aus Traktorlänge, Streuerlänge und Einbiegeradius bis zur Vorgewendefahrgasse berücksichtigt, und den Einschaltpunkt nach der ersten Strategie auf die optimierte Überlappung der Feldeinfahrt zum Vorgewende einstellt. Mit dieser zweiten Strategie wird folglich durch Eingabe der Traktorlänge, Streuerlänge und des Einbiegeradius von den Feldfahrgassen bis zur Vorgewendefahrgasse der Ausschaltpunkt ermittelt und über GPS und den Dosiercomputer eingestellt. Hierdurch wird also erreicht, dass der Landwirt aufgrund der erforderlichen Konzentration auf den Einlenkvorgang nicht vor diesem abgelenkt wird, also zu früh abschaltet, sondern durch die Automatisierung der GPS-Abschaltung der spätestmögliche Ausschaltpunkt und damit eine minimierte Unterdüngung erreicht wird.

Der weniger kritische Einschaltpunkt - es ist ausreichend Platz beim Einfahren in die Feldfahrgasse vorhanden - wird auf die mittels eines Rechenverfahrens, das die jeweiligen physikalischen Eigenschaften der Düngersorte, den Streuscheibentyp und die Drehzahl der Streuscheibe sowie die Arbeitsbreite berücksichtigt, optimierte Überlappung der Feldeinfahrt zum Vorgewende eingestellt.

Die als Abstand zwischen der Streuscheibenmitte und dem Schwerpunkt des auf der Feldoberfläche liegenden Streufächers bezeichnete Wurfweite ist maßgeblich abhängig von der Düngersorte (Gleitverhalten auf der Streuscheibe und Flugeigenschaften nach dem Abschleudern von der Streuscheibe) und dem Leistungsvermögen der Streuscheiben.

Die Dosierorgane werden am Aus- und Einschaltpunkt mehr oder weniger schlagartig ein- bzw. abgeschaltet. Als Dosierorgane bei Scheibendüngerstreuern werden heute meist schiebergesteuerte Dosieröffnungen eingesetzt. Der Antrieb der Dosierschieber kann hydraulisch oder elektrisch erfolgen. Bei elektrischen Antrieben beträgt die Schließ- und Öffnungszeit mehrere Sekunden, z.B. 5 s von "voll auf" bis "zu" bzw. umgekehrt, wodurch sich ein weicherer Übergang der Überlappung ergibt. Da sich in diesem Zeitraum der Traktor mit dem Streuer fortbewegt, ist bei beiden Strategien vorgesehen, dass zur Ermittlung des jeweiligen Ein- und Ausschaltpunktes zusätzlich die Fahrgeschwindigkeit und die beim Streuen aktuelle Dosieröffnung berücksichtigt wird.

Bei der zweiten Strategie werden gemäß einem bevorzugten Ausführungsbeispiel auch bei einem gezogenen Streuer die Länge des Streuergespanns (Vorderachse Traktor-Mitte Streuscheiben) und der Einbiegeradius in den Dosiercomputer eingegeben.

Gemäß einem weiteren Ausführungsbeispiel ist vorgesehen, dass die Drehzahl der dem Feld zugekehrten Streuscheibe erhöht wird.

Durch eine größere halbe Arbeitsbreite zum Feld hin wird der später bei der Düngerverteilung im Feld im Übergangsbereich von der Feldfahrgasse zur Vorgewendegasse entstehende unterdüngte Bereich zusätzlich mit Dünger versorgt.

Wie beim Abstreuen der Feldränder, wird auch beim Abstreuen der Feldfahrgasse des Vorgewendes der Zweischeibenstreuer zur Feldgrenze auf Grenzstreuen eingestellt.

In einer weiteren Ausbildung der Erfindung ist vorgesehen, dass mit ausreichendem Abstand zur Fahrgasse des Vorgewendes die Drehzahl der Streuscheiben merklich abgesenkt wird. Hierdurch wird erreicht, dass im unterdüngten Übergangsbereich die Arbeitsbreite und die Wurfweite reduziert werden, so dass der dann entstehende Streufächer sich in den bereits liegenden Streufächer bei üblicher Arbeitsbreite einschmiegt.

Der gleiche Effekt kann dadurch erreicht werden, dass zusätzlich der Aufgabepunkt des Düngers auf die Streuscheiben geändert wird. Zur Steigerung des Effektes können auch beide Maßnahmen zugleich ergriffen werden.

Um bei Einsatz dieser Maßnahmen eine Überdüngung im Zentrum zu vermeiden, wird zusätzlich die Dosiermenge reduziert.

Schließlich muss bei beiden Strategien Vorsorge dafür getragen werden, dass spätestens bei Erreichen der Fahrgasse im Vorgewende die Dosierorgane vollständig geschlossen sind, was mit den angegebenen Erfindungsmerkmalen gewährleistet ist.

Weitere Einzelheiten und Vorteile der Erfindung ergeben sich aus der nachfolgenden Beschreibung von in den Zeichnungen wiedergegebenen Ausführungsbeispielen. In der Zeichnung zeigen:
- Fig. 1.: in Vogelperspektive die Verhältnisse beim Streuen des Düngers am Feldende und im Vorgewende mit einem Anbaustreuer;
- Fig. 2.: eine schematische Darstellung des Streuvorgangs mit einem Anbaustreuer bei der Feldausfahrt in das Vorgewende, bei der Fahrt im Vorgewende und bei der Feldeinfahrt aus dem Vorgewende;
- Fig. 3.: in Vogelperspektive die Verhältnisse bei der Feldausfahrt in das Vorgewende nach der ersten Strategie in einer ersten Ausführung;
- Fig. 4.: eine der Fig. 3 entsprechende Vogelperspektive in einer zweiten Ausführung;
- Fig. 5.: eine der Fig. 2 entsprechende Vogelperspektive in einer dritten Ausführung mit zwei Vorgewendefahrgassen und
- Fig. 6.: eine der Fig. 5 entsprechende Darstellung mit einem gezogenen Zweischeibenstreuer.

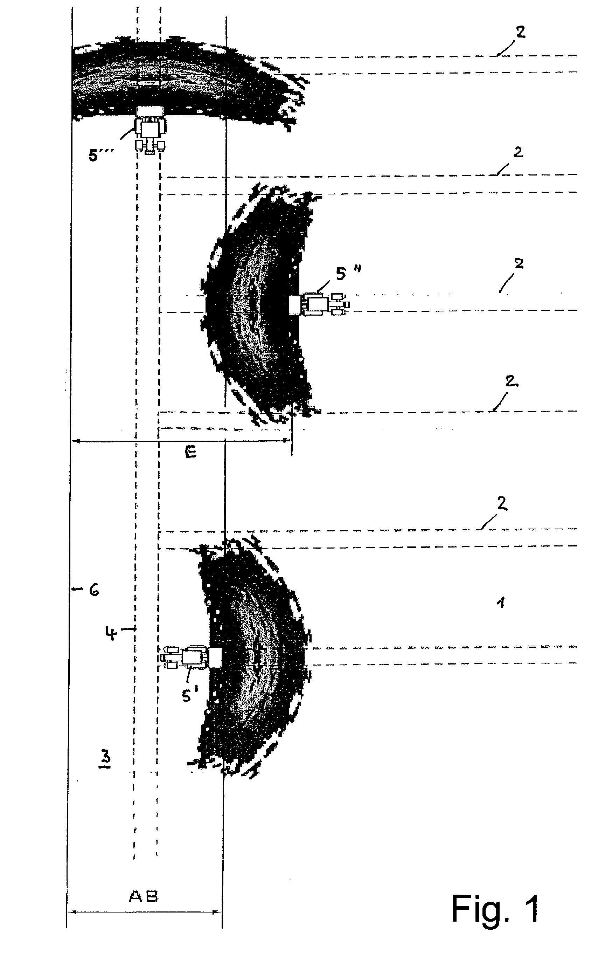

In Fig. 1 ist das Feld 1 mit den parallelen, jeweils im Abstand der Arbeitsbreite angelegten Fahrgassen 2 und das Vorgewende 3 mit einer Fahrgasse 4 gezeigt. Die Breite des Vorgewendes entspricht wiederum der Arbeitsbreite AB. Die Feldfahrgassen 2 münden im Vorgewende 3 in die Vorgewendefahrgasse 4.

Es ist ferner in Fig. 1 die etwa halbkreisförmige Düngerverteilung erkennbar, die der Traktor mit dem angebauten Zweischeibenstreuer hinter sich herzieht. Im Zentrum der Düngerverteilung liegt die größte Streumenge vor. Dieser Bereich ist hell wiedergegeben. Vom Zentrum nimmt die Streumenge nach außen (Schwärzung) bis auf null ab. Durch Anschlussfahren in benachbarten Fahrgassen - in Fig. 1 sind die Streufächer aus Gründen der besseren Übersicht durch zwei Fahrgassen voneinander getrennt - findet eine Überlappung benachbarter Streufächer und dadurch eine gleichmäßige Verteilung statt.

Das Streuergespann (Traktor und Anbaustreuer) befindet sich in der Position 5' bei der Feldausfahrt in das Vorgewende 3 und in der Position 5" beim Streuen im Feld 1, nachdem es zuvor aus dem Vorgewende 3 in die benachbarte Fahrgasse 2 eingefahren ist. Die Position 5" entspricht dem Einschaltpunkt der Dosierorgane, während die Position 5' (Feldausfahrt) dem Ausschaltpunkt der Dosierorgane entspricht. Dabei entsteht noch innerhalb des Feldes 1 eine Unterdüngung.

Das Vorgewende 3 wird gesondert - vor oder nach der Düngerverteilung im Feld 1 - abgestreut. Dies ist mit der Position 5"' des Streuergespanns angedeutet. Der Anbaustreuer ist auf Grenzstreuen eingestellt, so dass die halbkreisförmige Düngerverteilung zur Feldgrenze 6 hin steil abfällt und sich über die Arbeitsbreite im Vorgewende 3 eine gleichmäßig hohe Düngerverteilung ergibt.

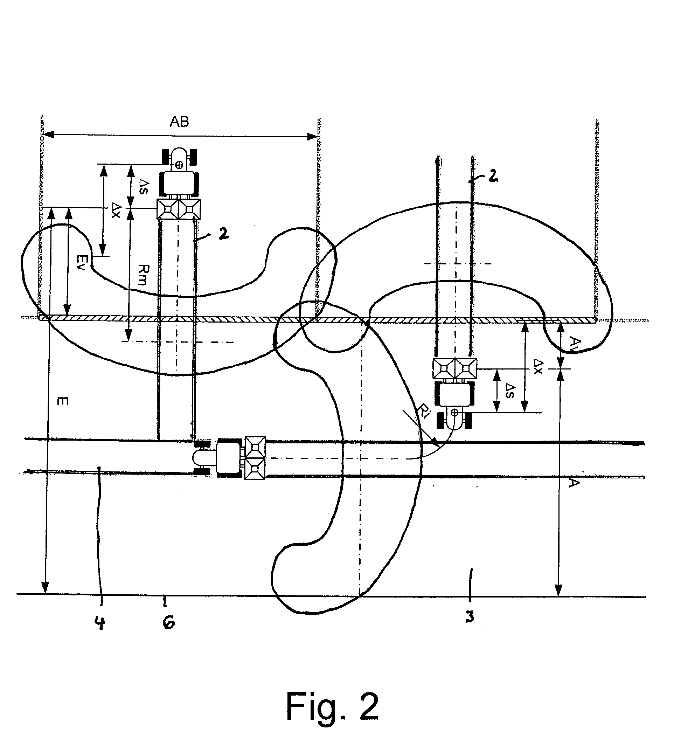

Fig. 2 zeigt in schematisierter Form die herkömmliche Fahrstrategie beim Übergang von einer Feldfahrgasse 2 zur benachbarten Fahrgasse 2 sowie die für die Ein- und Ausschaltpunkte maßgeblichen und in den Patentansprüchen genannten Parameter. An diese Fahrweise knüpft die zweite Strategie nach der Erfindung an. Für den Ein- und Ausschaltpunkt sind die räumlichen Verhältnisse (Traktorlänge, Streuerlänge und Einbiegeradius Ri) maßgeblich. Der Ausschaltpunkt befindet sich im Abstand A von der Feldgrenze 6 bzw. im Abstand Av von der Vorgewendegrenze. Der festlegbare Ausschaltabstand Δx schließt den Abstand Δs (GPS-Antenne/Streuscheibenmitte) ein. Beim Einbiegen des Traktors mit dem Kurvenradius Ri in die Vorgewendefahrgasse 4 werden die Dosierorgane GPS-gesteuert abgeschaltet. Bei der Feldeinfahrt schalten die Dosierorgane GPS-gesteuert im Abstand E von der Feldgrenze 6 bzw. im Abstand Ev von der Vorgewendegrenze ein. Der Abstand E (GPS-Antenne zur Streuscheibenmitte) ist wiederum mit Δs bezeichnet. Wie aus Fig. 2 ersichtlich, lässt sich in Abhängigkeit von den räumlichen Verhältnissen der Einschaltpunkt so festlegen, dass der Schwerpunkt der Düngerverteilung im Bereich der Vorgewendegrenze im Feld 1 liegt. In Fig. 2 ist der im Vorgewende 3 fahrende Traktor mit Anbaustreuer beim Abstreuen des Vorgewendes 3 gezeigt, wo er wiederum einen etwa halbkreisförmigen Streufächer hinter sich herzieht.

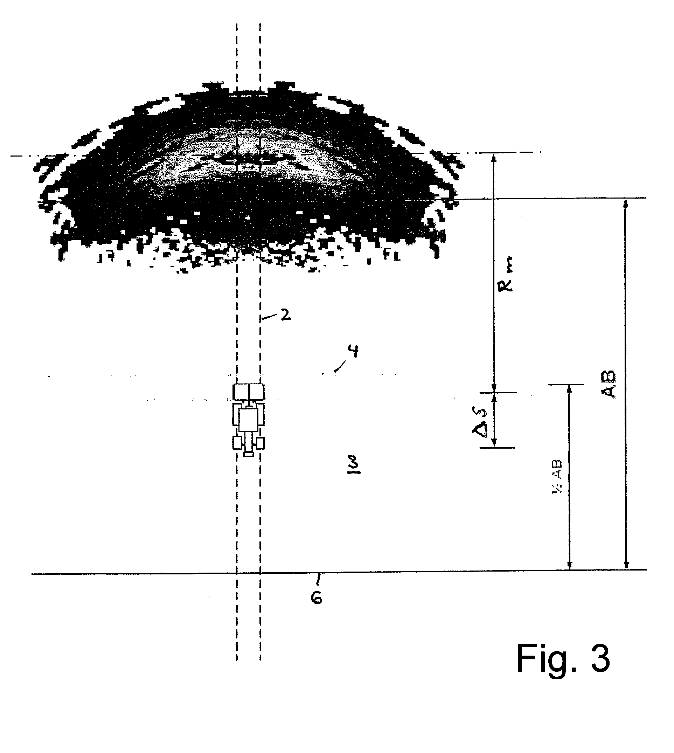

Fig. 3 zeigt die Fahrweise bei der ersten Strategie der Erfindung. Das Streuergespann fährt aus der Feldfahrgasse 2 bis in den Bereich oder über die Vorgewendefahrgasse 4 hinaus und erreicht damit jedenfalls den Ausschaltpunkt, der eine optimierte Düngerverteilung bei der Feldausfahrt beim Übergang vom Feld 1 in das Vorgewende 3 garantiert. Der Ausschaltpunkt hängt maßgeblich von der Wurfweite Rm (Abstand Streuscheibenmitte - Schwerpunkt der etwa halbkreisförmigen Düngerverteilung) und diese wiederum von der Düngersorte, dem Streuscheibentyp und der Drehzahl der Streuscheiben ab. Ferner geht die Arbeitsbreite in die Rechnung ein.

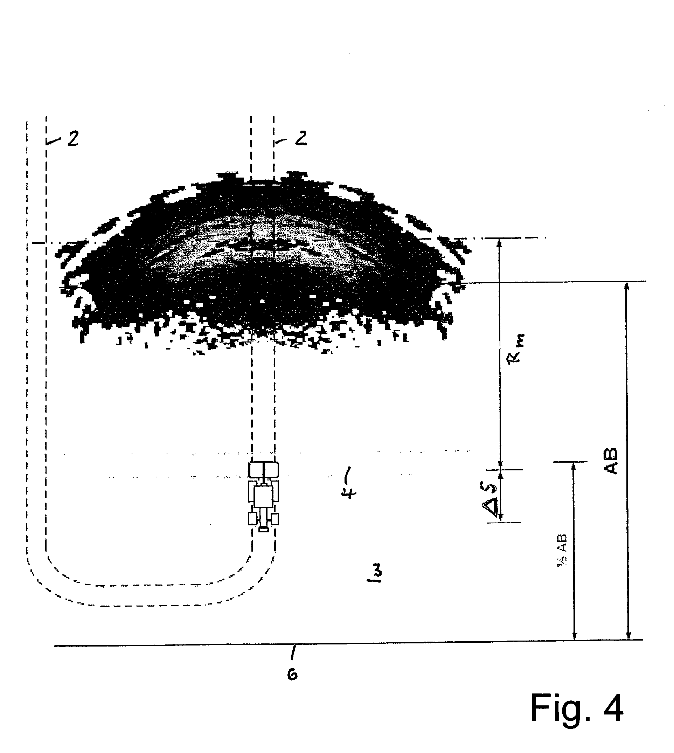

Bei der Fahrweise gemäß Fig. 4 kehrt das Streuergespann noch innerhalb des Vorgewendes 3, um in die nächste Feldfahrgasse 2 einzufahren. Der GPS-gesteuerte Einschaltpunkt der Dosierorgane liegt innerhalb des Feldes, wobei der Schwerpunkt der Düngerverteilung etwa auf der Feldgrenze zum Vorgewende liegt.

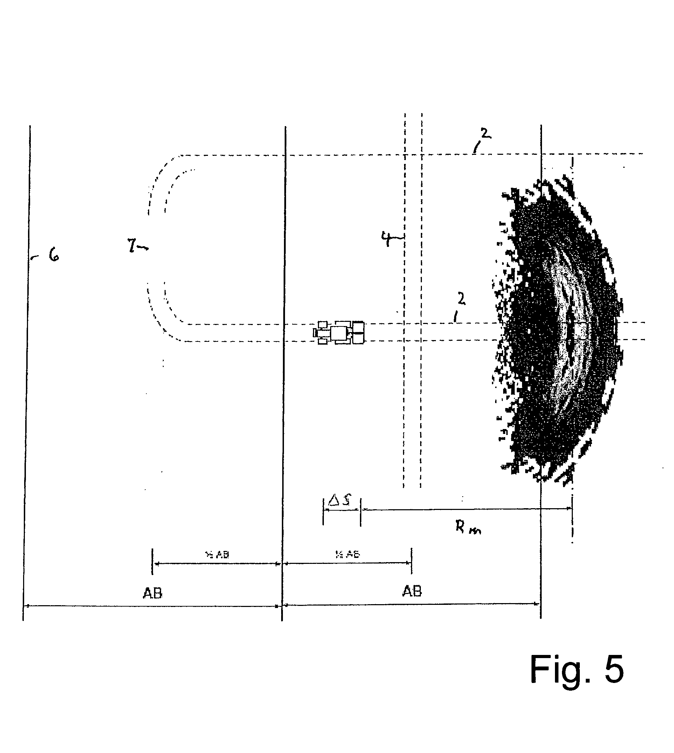

Gemäß Fig. 5 sind zwei parallele Vorgewendefahrgassen 4 und 7 angelegt. Bei der Feldausfahrt liegt der ermittelte Ausschaltpunkt wie bei der Fahrweise gemäß Fig. 4. Das Streuergespann fährt bis an die zweite Vorgewendefahrgasse heran, biegt in diese ein und verlässt diese zur erneuten Feldeinfahrt in Flucht dieser Fahrgasse. Der GPS-gesteuerte Einschaltpunkt der Dosierorgane liegt wiederum im Feldinneren.

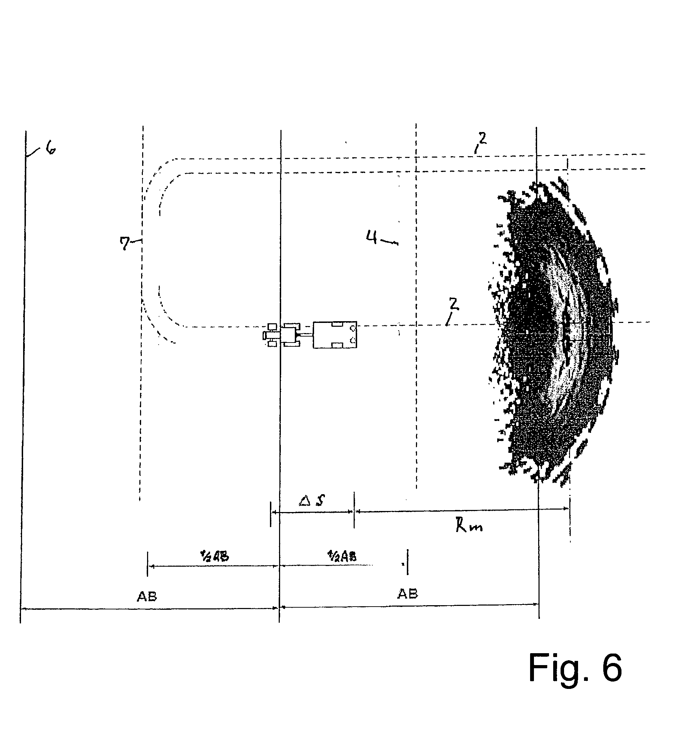

Fig. 6 zeigt die Fahrweise mit einem Streuerprogramm mit gezogenem Streuer. Hier ist stets eine zweite Vorgewendefahrgasse 7 erforderlich. Eine optimierte Düngerverteilung lässt sich mit einem solchen Gespann nur mit der ersten Strategie erreichen.

## Patentansprüche

1. Verfahren zum Verteilen von Mineraldünger auf dem Feld (1) und im Vorgewende (3) mittels Zweischeibenstreuern, deren rotierenden Streuscheiben der Mineraldünger aus einem Vorratsbehälter über Dosierorgane aufgegeben wird, wobei im Feld (1) durch Anschlussfahren in parallelen Fahrgassen (2) die etwa halbkreisförmige Düngerverteilung mit derjenigen der benachbarten Fahrgasse (2) überlappt und in der Überlappungszone zwischen der halbkreisförmigen Düngerverteilung im Feld (1) und der Düngerverteilung im Vorgewende (3) die Düngerablage mittels GPS-gesteuerter Dosiercomputer, welche die Dosierorgane mittels GPS-Signalen bei der Fahrt aus dem Feld (1) in das Vorgewende (3) ausschalten und bei der Fahrt vom Vorgewende (3) in das Feld (1) einschalten, unterbrochen bzw. wieder aufgenommen wird, wobei im Dosiercomputer zumindest eine erste Strategie je nach Fahrweise des Landwirts und Anspruch an eine gute Düngerverteilung für die Ein- und Ausschaltung der Dosierorgane hinterlegt und aufrufbar ist, welche einen GPS-gesteuerten Ausschalt- und Einschaltpunkt einstellt und eine unter Berücksichtigung der Arbeitsbreite (AB) ermittelte optimierte Düngerverteilung von der Feldausfahrt in das Vorgewende (3) und bei der Einfahrt von diesem in das Feld (1) ermöglicht, **dadurch gekennzeichnet, dass** bei der ersten Strategie die optimierte Düngerverteilung aufgrund komplexer Rechenverfahren pro Düngersorte und Arbeitsbreite (AB) ermittelt wird, wobei die optimierten Ausschalt- und Einschaltpunkte als Abstand (A, E) von der Feldgrenze (6) des Vorgewendes (3) bis zur Streuscheibenmitte in Abhängigkeit von der in den Dosiercomputer einzugebenden mittleren Wurfweite (Rm), welche dem Abstand zwischen dem Schwerpunkt des gegen die Fahrtrichtung auf der Feldoberfläche liegenden Streufächers und der Mitte der Streuscheiben des Zweischeibenstreuers entspricht, für jeden Düngertyp und jede Arbeitsbreite ermittelt und eingestellt werden.

2. Verfahren nach Anspruch 1, **dadurch gekennzeichnet, dass** die erste Strategie ferner eine aufgrund komplexer Rechenverfahren pro Drehzahl der Streuscheiben ermittelte optimierte Düngerverteilung von der Feldausfahrt in das Vorgewende (3) und bei der Einfahrt von diesem in das Feld (1) ermöglicht.

3. Verfahren nach Anspruch 1 oder 2, **dadurch gekennzeichnet, dass** die erste Strategie ferner eine aufgrund komplexer Rechenverfahren pro Streuscheibentyp ermittelte optimierte Düngerverteilung von der Feldausfahrt in das Vorgewende (3) und bei der Einfahrt von diesem in das Feld (1) ermöglicht, wobei bei der ersten Strategie die optimierten Ausschalt- und Einschaltpunkte als Abstand (A, E) von der Feldgrenze (6) des Vorgewendes (3) bis zur Streuscheibenmitte ferner in Abhängigkeit von dem Streuscheibentyp ermittelt und eingestellt werden.

4. Verfahren nach einem der Ansprüche 1 bis 3, **dadurch gekennzeichnet, dass** bei der ersten Strategie die optimierten Ausschalt- und Einschaltpunkte als Abstand (A, E) von der Feldgrenze (6) des Vorgewendes (3) bis zur Streuscheibenmitte
- intern ermittelt und eingestellt und/oder
- bei externer Ermittlung in den Dosiercomputer eingegeben und eingestellt
werden.

5. Verfahren nach einem der Ansprüche 1 bis 4, **dadurch gekennzeichnet, dass** im Dosiercomputer ferner eine zweite Strategie je nach Fahrweise des Landwirts und Anspruch an eine gute Düngerverteilung für die Ein- und Ausschaltung der Dosierorgane hinterlegt und wahlweise aufrufbar ist, wobei die zweite Strategie einen GPS-gesteuerten Ausschaltpunkt einstellt, der die räumlichen Verhältnisse aus Traktorlänge, Streuerlänge und Einbiegeradius (Ri) bis zur Vorgewendefahrgasse (4) berücksichtigt, und den Einschaltpunkt nach der ersten Strategie auf die optimierte Überlappung der Feldeinfahrt zum Vorgewende (3) einstellt.

6. Verfahren nach einem der Ansprüche 1 bis 5, **dadurch gekennzeichnet, dass** zusätzlich die Fahrgeschwindigkeit und die beim Streuen aktuelle Dosieröffnung in den Dosiercomputer eingegeben werden.

7. Verfahren nach einem der Ansprüche 1 bis 6, **dadurch gekennzeichnet, dass** zur Ermittlung des jeweiligen Einund Ausschaltpunktes zusätzlich die Fahrgeschwindigkeit und die beim Streuen aktuelle Dosieröffnung berücksichtigt wird.

8. Verfahren nach einem der Ansprüche 5 bis 7, **dadurch gekennzeichnet, dass** bei der zweiten Strategie auch bei gezogenem Streuer die Länge des Streuergespanns von der Vorderachse des Traktor bis zur Mitte der Streuscheiben und der Einbiegeradius in den Dosiercomputer eingegeben werden.

9. Verfahren nach einem der Ansprüche 1 bis 8, **dadurch gekennzeichnet, dass** bei der Fahrt im Vorgewende (3) der Zweischeibenstreuer zur Feldseite hin auf eine größere halbe Arbeitsbreite als die Arbeitsbreite in der Fahrgasse (4) im Vorgewende (3) eingestellt wird.

10. Verfahren nach Anspruch 9, **dadurch gekennzeichnet, dass** die Drehzahl der dem Feld (1) zugekehrten Streuscheibe erhöht wird.

11. Verfahren nach einem der Ansprüche 1 bis 10, **dadurch gekennzeichnet, dass** zur Feldgrenze (6) des Vorgewendes (3) hin der Zweischeibenstreuer auf Grenzstreuen eingestellt wird.

12. Verfahren nach einem der Ansprüche 1 bis 11, **dadurch gekennzeichnet, dass** mit ausreichendem Abstand zur Fahrgasse (4) des Vorgewendes (3) die Drehzahl der Streuscheiben merklich abgesenkt wird.

13. Verfahren nach Anspruch 12, **dadurch gekennzeichnet, dass** zusätzlich der Aufgabepunkt des Düngers auf die Streuscheiben geändert wird.

14. Verfahren nach Anspruch 12 oder 13, **dadurch gekennzeichnet, dass** zusätzlich die Dosiermenge reduziert wird.

## Claims

1. Method for distributing mineral fertilizer on a field (1) and in the headland (3) by means of twin disc spreaders, the rotating spreading discs of which are fed with the mineral fertilizer from a storage container via metering members, wherein, in the field (1), by driving in parallel tracks (2), the approximately semicircular distribution of fertilizer overlaps with that of the adjacent track (2), and, in the overlapping zone between the semicircular distribution of fertilizer in the field (1) and the distribution of fertilizer in the headland (3), the depositing of fertilizer is interrupted or resumed by means of GPS-controlled metering computers which switch off the metering members by means of GPS signals upon travel out of the field (1) into the headland (3) and switch on the metering members upon travel from the headland (3) into the field (1), wherein at least a first strategy for switching on and switching off the metering members is stored in the metering computer and is retrievable depending on the farmer's driving technique and requirement for good distribution of the fertilizer, which strategy sets a GPS-controlled switching-off and switching-on point and permits an optimized distribution of fertilizer, which is determined taking into consideration the working width (AB), from the field exit into the headland (3) and upon entry from the latter into the field (1), **characterized in that**, in the first strategy, the optimized distribution of fertilizer is determined by fertilizer type and working width (AB) on the basis of complex calculating methods,
wherein the optimized switching-off and switching-on points are determined and set as the distance (A, E) from the field boundary (6) of the headland (3) as far as the spreading disc centre depending on the average throwing range (Rm), which is to be input into the metering computer and corresponds to the distance between the centre of gravity of the spreading fan, which is located on the field surface counter to the direction of travel, and the centre of the spreading discs of the twin disc spreader, for each fertilizer type and each working width.

2. Method according to Claim 1, **characterized in that** the first strategy furthermore permits an optimized distribution of fertilizer, which is determined by rotation speed of the spreading discs on the basis of complex calculating methods, from the field exit into the headland (3) and upon entry from the latter into the field (1).

3. Method according to Claim 1 or 2, **characterized in that** the first strategy furthermore permits an optimized distribution of fertilizer, which is determined by spreading disc type on the basis of complex calculating methods, from the field exit into the headland (3) and upon entry from the latter into the field (1), wherein, in the first strategy, the optimized switching-off and switching-on points are furthermore determined and set as the distance (A, E) from the field boundary (6) of the headland (3) as far as the spreading disc centre depending on the spreading disc type.

4. Method according to one of Claims 1 to 3, **characterized in that**, in the first strategy, the optimized switching-off and switching-on points
- are determined and set internally as the distance (A, E) from the field boundary (6) of the headland (3) as far as the spreading disc centre, and/or
- when determined externally are input into the metering computer and set.

5. Method according to one of Claims 1 to 4, **characterized in that**, furthermore, a second strategy for switching on and switching off the metering members is stored in the metering computer and is optionally retrievable depending on the farmer's driving technique and requirement for good distribution of the fertilizer, wherein the second strategy sets a GPS-controlled switching-off point which takes into consideration the spatial ratios of tractor length, spreader length and swing-around radius (Ri) as far as the headland track (4), and sets the switching-on point in accordance with the first strategy to the optimized overlapping of the field entry with the headland (3).

6. Method according to one of Claims 1 to 5, **characterized in that** the driving speed and the metering opening active during the spreading are additionally input into the metering computer.

7. Method according to one of Claims 1 to 6, **characterized in that**, in order to determine the respective switching-on and switching-off point, the driving speed and the metering opening active during the spreading are additionally taken into consideration.

8. Method according to one of Claims 5 to 7, **characterized in that**, in the second strategy, with the spreader also being drawn, the length of the spreader combination from the front axle of the tractor as far as the centre of the spreading discs, and the swinging-around radius are input into the metering computer.

9. Method according to one of Claims 1 to 8, **characterized in that**, during the travel in the headland (3), the twin disc spreader is set to a larger half working width towards the field side than the working width in the track (4) in the headland (3).

10. Method according to Claim 9, **characterized in that** the rotational speed of the spreading disc facing the field (1) is increased.

11. Method according to one of Claims 1 to 10, **characterized in that** the twin disc spreader is set to boundary spreading towards the field boundary (6) of the headland (3).

12. Method according to one of Claims 1 to 11, **characterized in that** the rotational speed of the spreading discs is noticeably reduced at a sufficient distance of the headland (3) from the track (4).

13. Method according to Claim 12, **characterized in that** the feeding point of the fertilizer to the spreading discs is additionally changed.

14. Method according to Claim 12 or 13, **characterized in that** the metering rate is additionally reduced.

## Revendications

1. Procédé de répartition d'engrais minéral sur le champ (1) et dans le bout de champ (3) à l'aide d'épandeurs à deux disques, dont les disques d'épandage tournants épandent l'engrais minéral provenant d'un réservoir via des organes de dosage, sachant que dans le champ (1), la répartition d'engrais approximativement en forme de demi-cercle chevauche celle du couloir de conduite (2) connexe du fait de la conduite raccordée dans les couloirs de conduite (2) parallèles et que dans la zone de chevauchement entre la répartition d'engrais en forme de demi-cercle dans le champ (1) et la répartition d'engrais dans le bout de champ (3), le dépôt d'engrais étant interrompu et/ou repris à l'aide d'un ordinateur de dosage commandé par GPS déconnectant les organes de dosage à l'aide de signaux GPS lors de la conduite hors du champ (1) dans le bout de champ (3) et les connectant lors de la conduite du bout de champ (3) dans le champ (1), sachant qu'au moins une première stratégie d'activation et désactivation des organes de dosage est respectivement mémorisée et interrogeable dans l'ordinateur de dosage en fonction du mode de conduite de l'agriculteur et de la volonté d'appliquer une certaine répartition d'engrais, ladite stratégie réglant un point d'activation et de désactivation commandé par GPS et permettant une répartition d'engrais optimisée calculée en tenant compte de la largeur de travail (AB) de la conduite hors champ dans le bout de champ (3) et lors de l'entrée depuis celui-ci jusque dans le champ (1), **caractérisé en ce qu'**avec la première stratégie, la répartition d'engrais optimisée est calculée sur la base d'un procédé de calcul complexe par sorte d'engrais et largeur de travail (AB), les points d'activation et de désactivation optimisés étant calculés et réglés, pour chaque type d'engrais et chaque largeur de travail, sous la forme de la distance (A, E) de la limite de champ (6) du bout de champ (3) jusqu'au centre des disques d'épandage en fonction de la largeur de projection (Rm) moyenne entrée dans l'ordinateur de dosage correspondant à la distance entre le centre de gravité de l'éventail d'épandage sur la surface de champ reposant à l'encontre de la direction de conduite et le centre des disques d'épandage de l'épandeur à deux disques.

2. Procédé selon la revendication 1, **caractérisé en ce que** la première stratégie permet en outre une répartition d'engrais optimisée calculée sur la base d'un procédé de calcul complexe par vitesse de rotation des disques d'épandage, de la conduite hors champ dans le bout de champ (3) et lors de l'entrée de celui-ci jusque dans le champ (1).

3. Procédé selon la revendication 1 ou 2, **caractérisé en ce que** la première stratégie permet en outre une répartition d'engrais optimisée calculée sur la base d'un procédé de calcul complexe par type de disques d'épandage de la conduite hors champ dans le bout de champ (3) et lors de l'entrée de celui-ci dans le champ (1), sachant que pour la première stratégie, les points de désactivation et d'activation optimisés sont calculés et réglés sous la forme de la distance (A, E) de la limite de champ (6) du bout de champ (3) jusqu'au centre des disques d'épandage, en outre en fonction du type de disques d'épandage.

4. Procédé selon l'une quelconque des revendications 1 à 3, **caractérisé en ce que** pour la première stratégie, les points de désactivation et d'activation optimisés sont :
- calculés et réglés en interne ;
- entrés et réglés par calcul externe dans l'ordinateur de dosage ;
sous la forme de la distance (A, E) de la limite de champ (6) du bout de champ (3) jusqu'au centre des disques d'épandage.

5. Procédé selon l'une quelconque des revendications 1 à 4, **caractérisé en ce que** dans l'ordinateur de dosage, une deuxième stratégie est en outre respectivement mémorisée et interrogeable au choix en fonction du mode de conduite de l'agriculteur et de la volonté d'appliquer une certaine répartition d'engrais pour la connexion et déconnexion des organes de dosage, la deuxième stratégie réglant un point de désactivation commandé par GPS prenant en compte les rapports dans l'espace de la longueur de tracteur, de la longueur d'épandage et du rayon de courbure (Ri) jusqu'au couloir de conduite de bout de champ (4) et réglant le point d'activation en fonction de la première stratégie sur le chevauchement optimisé de l'entrée du champ jusqu'au bout de champ (3).

6. Procédé selon l'une quelconque des revendications 1 à 5, **caractérisé en ce qu'**en outre, la vitesse de conduite et l'ouverture de dosage actuelle de dispersion sont entrées dans l'ordinateur de dosage.

7. Procédé selon l'une quelconque des revendications 1 à 6, **caractérisé en ce que** pour calculer le point de connexion et déconnexion respectif, la vitesse de conduite et l'ouverture de dosage actuelle de dispersion est en outre prise en compte.

8. Procédé selon l'une quelconque des revendications 5 à 7, **caractérisé en ce que** dans la deuxième stratégie également lorsque l'épandeur est tiré, la longueur d'attelage d'épandeur de l'essieu avant du tracteur jusqu'au centre des disques d'épandage et le rayon de flexion sont entrés dans l'ordinateur de dosage.

9. Procédé selon l'une quelconque des revendications 1 à 8, **caractérisé en ce que** lors de la conduite dans le bout de champ (3), l'épandeur à deux disques est réglé en direction du côté du champ sur une plus grande demie largeur de travail que la largeur de travail du couloir de conduite (4) du bout de champ (3).

10. Procédé selon la revendication 9, **caractérisé en ce que** la vitesse de rotation du disque de dispersion est augmentée du côté du champ (1).

11. Procédé selon l'une quelconque des revendications 1 à 10, **caractérisé en ce que** l'épandeur à deux disques est réglé sur l'épandage en limite en direction de la limite de champ (6) du bout de champ (3).

12. Procédé selon l'une quelconque des revendications 1 à 11, **caractérisé en ce que** la vitesse de rotation des disques d'épandage est notablement abaissée à une distance suffisante du couloir de conduite (4) du bout de champ (3).

13. Procédé selon la revendication 12, **caractérisé en ce qu'**on modifie en sus le point cible de l'engrais sur les disques d'épandage.

14. Procédé selon la revendication 12 ou 13, **caractérisé en ce qu'**on réduit en sus la quantité de dosage.
